# EUROPÄISCHE PATENTANMELDUNG

(11) **EP 2 409 863 A1**
(43) Veröffentlichungstag der Anmeldung: **25.01.2012**
(21) Anmeldenummer: 11170380.7
(22) Anmeldetag: 17.06.2011
(51) Int. Cl.: B60G 21/055

(54) **Verfahren zur Herstellung eines Stabilisators und Stabilisator**

(30) Priorität: 20.07.2010 DE 102010036513
(71) Anmelder: Benteler Automobiltechnik GmbH, 33102 Paderborn (DE)
(72) Erfinder: Hammelmaier, Ullrich, 33100 Paderborn (DE); Janzen, Andreas, 34439 Willebadessen-Peckelsheim (DE)
(74) Vertreter: Kleine, Hubertus

(57) **Zusammenfassung**

Ein Verfahren zur Herstellung eines Stabilisators eines Kraftfahrzeuges weist die folgenden Verfahrensschritte auf: Einteilung des Stabilisators entlang seiner Längserstreckung in stark und weniger stark belastete Abschnitte auf Basis von Modellrechnungen und/oder von vorab durchgeführten Messungen, Anpassung der Biegesteifigkeit von Rohrelementen (2, 3, 4) an die am jeweiligen Abschnitt gegebenen Belastungsanforderungen durch Veränderung des Querschnittes der Rohrelemente (2, 3, 4), Biegen der Rohrelementen (2, 3, 4) zu einer vorbestimmten Gestalt, Zusammenfügen des Stabilisators zu einem aus mehreren Rohrelementen (2, 3, 4) mit zumindest teilweise unterschiedlichen Querschnitten (Q2, Q3, Q4) bestehenden Rohrstücks (1) durch stoffschlüssiges Verbinden der Rohrelemente (2, 3,4).

## Beschreibung

Die vorliegende Erfindung betrifft ein Verfahren zur Herstellung eines Stabilisators eines Kraftfahrzeuges gemäß dem Oberbegriff des Anspruchs 1 sowie einen Stabilisator eines Kraftfahrzeuges.

Stabilisatoren werden bei Kraftfahrzeugen als Torsionsfedern zwischen den beiden Rädern einer Fahrzeugachse eingesetzt. Mithilfe eines solchen Stabilisators wird das Wankverhalten der Kraftfahrzeugkarosserie bei wechselseitiger Einfederung der Räder einer Achse begrenzt. Eine solche Begrenzung des Wankverhaltens ist notwendig, um das Fahrverhalten des Kraftfahrzeuges in einem für den Fahrer zu beherrschenden Bereichs zu halten sowie die Radlastverteilung möglichst gleichmäßig zu gestalten.

Bei den gattungsgemäßen Stabilisatoren unterscheidet man im Wesentlichen zwischen aktiven Stabilisatoren und passiven Stabilisatoren. Als passive Stabilisatoren werden dabei reine Torsions-Biegestäbe bezeichnet. Aktive Stabilisatoren unterscheiden sich von den passiven Stabilisatoren dadurch, dass bei diesen zwischen zwei Stabilisatorhälften ein Aktor eingesetzt ist, mit dem aktiv auf das Wankverhalten der Fahrzeugkarosserie Einfluss genommen werden kann. Des Weiteren sind aus dem Stand der Technik auch noch semiaktive Stabilisatoren sowie schaltbare Stabilisatoren bekannt. Bei den letztgenannten Arten von Stabilisatoren sowie den aktiven Stabilisatoren muss der Aktor bzw. das schaltbare Element mit den jeweiligen Stabilisatorhälften verbunden werden, was durch Reibschweißen, Formverbinden oder auch mithilfe von Zwischenstücken realisiert wird.

Nachteilig bei den herkömmlichen Stabilisatoren ist, dass die gewünschte Steifigkeit und die geforderte Lebensdauer der Stabilisatoren an sich gegensätzliche Anforderungen an die Materialbeschaffenheit der Stabilisatoren stellen. Die Spannungsverteilung im Stabilisator ist unter Belastung aufgrund der Geometrie, insbesondere der Querschnitte, des Stabilisators nicht optimal, so dass die Bauteilstruktur des Stabilisators nicht optimal ausgenutzt wird. Um einen hinreichenden Kompromiss zwischen Stabilisatorsteifigkeit und Belastbarkeit und Lebensdauer des Stabilisators zu erreichen, wird derzeit sehr aufwendig mittels Rundhämmern oder Kneten der Querschnitt des Stabilisators den jeweiligen Anforderungen entsprechend bearbeitet. Diese Nachbearbeitung der Stabilisatorquerschnitte ist sehr zeit- und energieaufwendig. Außerdem sind die mit dieser Art von Nachbearbeitung der Querschnitte der Stabilisatoren physikalische Grenzen gesetzt, so dass eine optimale Spannungsverteilung im Stabilisator nicht immer erreichbar ist.

Aufgabe der vorliegenden Erfindung ist es, ein Verfahren zur Herstellung eines Stabilisators bereitzustellen, mit dem die Einstellung der Steifigkeit und der Spannung in dem Stabilisatorprozess sicher und kostengünstig durchführbar ist.

Diese Aufgabe wird durch ein Verfahren zur Herstellung eines Stabilisators mit den Merkmalen des Anspruchs 1 sowie durch einen Stabilisator mit den Merkmalen des Anspruchs 12 gelöst.

Bei dem erfindungsgemäßen Verfahren wird das Rohrstück in einem ersten Verfahrensschritt entlang seiner Längserstreckung in stark und weniger stark belastete Abschnitte auf Basis von Modellrechnungen und/oder von vorab durchgeführten Messungen eingeteilt. In einem weiteren Verfahrensschritt wird der Querschnitt des Stabilisators zur Anpassung der Biegesteifigkeit des Stabilisators verändert und anschließend zu einer vorbestimmten Gestalt gebogen. Schließlich erfolgt eine Anpassung der Querschnitte an die am jeweiligen Abschnitt gegebenen Belastungsanforderungen durch Zusammenfügen des Rohrstücks aus mehreren Rohrelementen mit zumindest teilweise unterschiedlichen Querschnitten durchgeführt. Die einzelnen Rohrelemente werden dabei stoffschlüssig miteinander verbunden.

Dadurch ist in verfahrenstechnisch einfacher Weise ein Stabilisator herstellbar, der aus einer Kombination von Rohrelementen mit unterschiedlichen Rohrquerschnitten besteht, mit denen den jeweiligen lokal auftretenden Belastungen wie Biegung, Torsion oder Schub Rechnung getragen werden kann. Die Steifigkeit des Stabilisators lässt sich so in einfacher Weise gezielt einstellen. Ein zeitlich und energetisch aufwendiger Umformprozess kann so eingespart werden, so dass der gesamte Herstellungsprozess dadurch beherrschbarer und preisgünstiger wird.

Vorteilhafte Ausgestaltungen der Erfindung sind Gegenstand der Unteransprüche.

Gemäß einer besonderen Ausführungsvariante des erfindungsgemäßen Verfahrens wird in einem weiteren Verfahrensschritt eine eine thermische Behandlung des Stabilisatormaterials zur Anpassung der Materialeigenschaften des Stabilisatormaterials durchgeführt.

Im Falle der Herstellung eines aktiven Stabilisators oder eines schaltbaren Stabilisators wird in einem weiteren Verfahrensschritt jeweils ein endseitiger Abschnitt der rohrförmigen Elemente stoffschlüssig mit dem Aktor bzw. dem Schaltelement verbunden, um eine sichere Verbindung zwischen dem Aktor und den Stabilisatorteilen zu erhalten.

Zur weiter verbesserten Anbindung der Rohrelemente mit dem Aktor werden die mit dem Aktor zu verbindenden endseitigen Abschnitte der Rohrelemente vor der Anbindung an den Aktor in einem weiteren Verfahrensschritt aufgeweitet, um zwischen dem Rohrelement und dem Aktor einen Presssitz zu schaffen.

Des weiteren kann der endseitige Abschnitt der Rohrelemente nach dem Aufweiten noch weiter mechanisch bearbeitet werden, insbesondere plangedreht oder gefräst werden, um eine besonders stabile Verbindung zwischen dem Rohrelement und dem Aktor zu schaffen.

Nachfolgend wird ein Ausführungsbeispiel der Erfindung anhand der beiliegenden Zeichnung näher erläutert. Es zeigt:

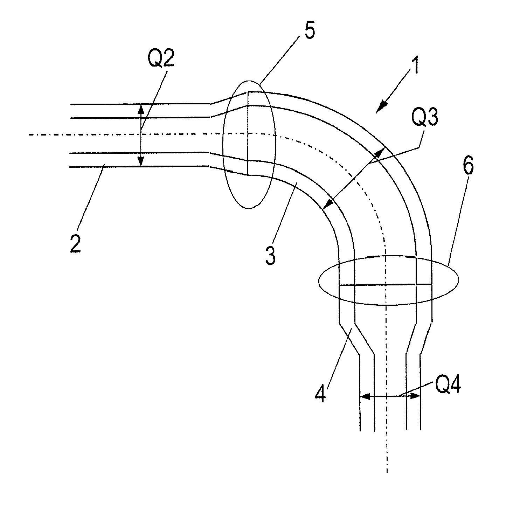

- Figur 1: eine schematische Darstellung eines Rohrstücks, dass aus drei Rohrelementen mit drei unterschiedlichen Querschnitten zusammengesetzt ist.

Ein Rohrstabilisator besteht im Falle eines passiven Stabilisators im wesentlichen aus einem Rohrstück 1, dass wie in dem in Figur 1 gezeigten Ausschnitt gezeigt aus mehreren Rohrelementen 2, 3, 4 mit unterschiedlichem Querschnitt Q2, Q3, Q4 zusammengesetzt ist.

Die Zusammensetzung der einzelnen Rohrelemente 2, 3, 4 erfolgt vorzugsweise durch eine stoffschlüssige Verbindung, insbesondere durch Schweißen. Für die Auswahl der unterschiedlichen Rohrelemente 2, 3, 4 mit den jeweiligen unterschiedlichen Rohrquerschnitten Q2, Q3, Q4 wird bei der Herstellung eines solchen Stabilisators zunächst eine Einteilung des Stabilisators 1 entlang seiner Längserstreckung vorgenommen, die den Stabilisator in stark und weniger stark belastete Abschnitte einteilt. Diese Einteilung erfolgt dabei bevorzugt auf Basis von Modellrechnungen und/oder von vorab durchgeführten Messungen an einem beispielsweise durchgängig mit einem einheitlichen Querschnitt versehenen Rohrstabilisators.

Die Belastungen, denen die einzelnen Rohrelemente 2, 3, 4 ausgesetzt sind, bestehen dabei in einer Biegebelastung, in Torsionsbelastungen sowie Schubbelastungen. Nach dem die Einteilung der Abschnitte des Stabilisators je nach auftretender Belastungsart und Größe vorgenommen worden ist, erfolgt eine Auswahl von Rohrelementen 2, 3, 4 mit Querschnitten Q2, Q3, Q4 von geeigneter Größe und Geometrie, die anschließend zu einem Rohrstück zusammengefügt, insbesondere miteinander verschweißt werden. Die Querschnitte Q2, Q3, Q4 können dabei je nach Belastungsanforderung im Durchmesser als auch in deren Geometrie, beispielsweise kreisrund, oval, vieleckig variieren.

Um die Anbindung der einzelnen Rohrelemente 2, 3, 4 miteinander bzw. im Falle der Herstellung eines aktiven Stabilisators mit dem jeweiligen Aktor hinreichend qualitativ zu gewährleisten, werden gemäß einer bevorzugten Ausführungsvariante des erfindungsgemäßen Verfahrens die jeweiligen endseitigen Abschnitte 5, 6 der Rohrelemente 2, 3, 4 vor der Anbindung an das zugehörige Rohrelement 2, 3, 4 bzw. den Aktor aufgeweitet, gestaucht und/oder mechanisch weiterbearbeitet, insbesondere plangedreht oder gefräst.

Denkbar ist auch eine zusätzliche mechanische Bearbeitung des Querschnitts von zumindest Teilstücken einzelner Rohrelemente 2, 3 ,4, um die gewünschte Steifigkeit des Stabilisators in einem bestimmten Teilbereich weiter zu optimieren. Auch eine mechanische Einarbeitung einer Schweißvorbereitung an den endseitige Abschnitt (5, 6) der Rohrelemente (2, 3, 4) ist denkbar.

Als weitere optionale Verfahrensschritte können zumindest Teilbereiche des Stabilisators mit einer Beschichtung versehen werden, um besonderen mechanischen oder thermischen Belastungen standhalten zu können. Auch eine Kugelstrahlung von Teilbereichen des Rohrstückes 1 zur weiteren Verfestigung oder eine thermische Behandlung von zumindest einem Teil des Rohrstückes 1 zur Änderung seiner Materialeigenschaften ist denkbar.

Wichtig ist, dass mit dem erfindungsgemäßen Verfahren Stabilisatoren in einfacher und kostengünstiger Weise herstellbar sind, die dem unterschiedlich starken Belastungen in einzelnen Abschnitten des Stabilisators Rechnung tragen.

### Bezugszeichenliste

| | |
|---|---|
| Rohrstück | 1 |
| Rohrelement | 2 |
| Rohrelement | 3 |
| Rohrelement | 4 |
| Endseitiger Abschnitt | 5 |
| Endseitiger Abschnitt | 6 |
| Querschnitt | Q2 |
| Querschnitt | Q3 |
| Querschnitt | Q4 |

## Patentansprüche

1. Verfahren zur Herstellung eines Stabilisators eines Kraftfahrzeuges mit den Verfahrensschritten:
- Einteilung des Stabilisators entlang seiner Längserstreckung in stark und weniger stark belastete Abschnitte auf Basis von Modellrechnungen und/oder von vorab durchgeführten Messungen,
- Anpassung der Biegesteifigkeit von Rohrelementen (2, 3, 4) an die am jeweiligen Abschnitt gegebenen Belastungsanforderungen durch Veränderung des Querschnittes der Rohrelemente (2, 3, 4),
- Biegen der Rohrelementen (2, 3, 4) zu einer vorbestimmten Gestalt,
- Zusammenfügen des Stabilisators zu einem aus mehreren Rohrelementen (2, 3, 4) mit zumindest teilweise unterschiedlichen Querschnitten (Q2, Q3, Q4) bestehenden Rohrstücks (1) durch stoffschlüssiges Verbinden der Rohrelemente (2, 3, 4).

2. Verfahren nach Anspruch 1, **dadurch gekennzeichnet, dass** das Stabilisatormaterial zur Änderung seiner Materialeigenschaften zumindest abschnittsweise thermisch behandelt wird.

3. Verfahren nach Anspruch 1 oder 2, wobei der Stabilisator als aktiver Stabilisator ausgebildet ist, der mindestens zwei Rohrelemente (2, 3, 4) und einen mit den Rohrelementen (2, 3, 4) verbundenen Aktor aufweist, **dadurch gekennzeichnet, dass** jeweils ein endseitige Abschnitt (5, 6) der Rohrelemente (2, 3, 4) stoffschlüssig mit dem Aktor verbunden werden.

4. Verfahren nach Anspruch 3, **dadurch gekennzeichnet, dass** der mit dem Aktor zu verbindende endseitige Abschnitt der Rohrelemente (2, 3, 4) vor der Anbindung an den Aktor aufgeweitet wird.

5. Verfahren nach Anspruch 3 oder 4, **dadurch gekennzeichnet, dass** der der mit dem Aktor zu verbindende endseitige Abschnitt (5, 6) der Rohrelemente (2, 3, 4) aufgestaucht wird.

6. Verfahren nach einem der vorstehenden Ansprüche, **dadurch gekennzeichnet, dass** zumindest ein Teilbereich des Rohrstücks (1) verfestigungsgestrahlt, insbesondere kugelgestrahlt wird.

7. Verfahren nach einem der vorstehenden Ansprüche, **dadurch gekennzeichnet, dass** der endseitige Abschnitt (5, 6) der Rohrelemente (2, 3, 4) nach dem Aufweiten mechanisch bearbeitet wird.

8. Verfahren nach Anspruch 7, **dadurch gekennzeichnet, dass** der endseitige Abschnitt (5, 6) der Rohrelemente (2, 3, 4) plangedreht oder gefräst wird.

9. Verfahren nach Anspruch 7 oder 8, **dadurch gekennzeichnet, dass** der endseitige Abschnitt (5, 6) der Rohrelemente (2, 3, 4) mit einer Schweißvorbereitung versehen wird.

10. Verfahren nach einem der vorstehenden Ansprüche, **dadurch gekennzeichnet, dass** zumindest bei einem Teilbereich des Rohrstücks (1) der Querschnitt mechanisch verändert wird.

11. Verfahren nach einem der vorstehenden Ansprüche, **dadurch gekennzeichnet, dass** zumindest ein Teilbereich des Rohrstücks (1) mit einer Beschichtung versehen wird.

12. Stabilisators (1) eines Kraftfahrzeuges, aufweisend ein gebogenes Rohrstück, **dadurch gekennzeichnet, dass** das Rohrstück (1) aus mehreren Rohrelementen (2, 3, 4) mit zumindest teilweise unterschiedlichen Querschnitten (Q2, Q3, Q4) zusammengesetzt ist.
